# EUROPÄISCHE PATENTSCHRIFT

(11) **EP 2 536 771 B1**
(45) Veröffentlichungstag und Bekanntmachung des Hinweises auf die Patenterteilung: **23.05.2018**
(21) Anmeldenummer: 11701060.3
(22) Anmeldetag: 18.01.2011
(51) Int. Cl.: C08F 220/06, C08F 2/44, C08J 3/24

(54) **VERFAHREN ZUR RÜCKFÜHRUNG VON POLYMERFEINTEILCHEN**
PROCESS FOR RECYCLING POLYMER FINES
PROCÉDÉ POUR LE RECYCLAGE DE FINES PARTICULES DE POLYMÈRE

(30) Priorität: 16.02.2010 DE 102010008163
(43) Veröffentlichungstag der Anmeldung: 26.12.2012
(73) Patentinhaber: Evonik Degussa GmbH, 45128 Essen (DE)
(72) Erfinder: RUDOLPH, Henry, 47809 Krefeld (DE); HOEFGES, Thomas, 47807 Krefeld (DE); VAN STIPHOUDT, Manfred, 47906 Kempen (DE); HARREN, Jörg, 52499 Baesweiler (DE); WATTEBLED, Laurent, 40589 Düsseldorf (DE); FURNO, Franck, 42579 Heiligenhaus (DE); SOPPE, Frank, 47608 Geldern (DE)
(86) Internationale Anmeldenummer: PCT/EP2011/050570
(87) Internationale Veröffentlichungsnummer: WO 2011/101188

(56) Entgegenhaltungen:
- EP-A1- 0 513 780
- EP-A1- 0 692 514
- US-A1- 2003 008 946

## Beschreibung

Die vorliegende Erfindung betrifft ein Verfahren zur Herstellung eines wasserabsorbierenden, auf säuregruppenhaltigen Monomeren basierenden Polymergebildes.

Superabsorber sind wasserunlösliche, vernetzte Polymere, die in der Lage sind, unter Quellung und Ausbildung von Hydrogelen große Mengen an wässrigen Flüssigkeiten, insbesondere Körperflüssigkeiten, vorzugsweise Urin oder Blut, aufzunehmen und unter Druck zurückzuhalten. Im Allgemeinen betragen diese Flüssigkeitsaufnahmen das mindestens 10-Fache oder gar das mindestens 100-Fache des Trockengewichts der Superabsorber bzw. der superabsorbierenden Zusammensetzungen an Wasser. Durch diese charakteristischen Eigenschaften finden diese Polymere hauptsächlich Anwendung in Sanitärartikeln wie Babywindeln, Inkontinenzprodukten oder Damenbinden. Einen umfassenden Überblick über Superabsorber bzw. superabsorbierende Zusammensetzungen, ihre Anwendung und ihre Herstellung geben F. L. Buchholz und A. T. Graham (Herausgeber) in "Modern Superabsorbent Polymer Technology", Wiley-VCH, New York, 1998.

Die Herstellung der Superabsorber erfolgt in der Regel durch die radikalische Polymerisation säuregruppen-tragender, meist teilneutralisierter Monomere in Gegenwart von Vernetzern. Dabei lassen sich durch die Auswahl der Monomerzusammensetzung, der Vernetzer sowie der Polymerisationsbedingungen und der Verarbeitungsbedingungen für das nach der Polymerisation erhaltene Hydrogel Polymere mit unterschiedlichen Absorptionseigenschaften herstellen. Weitere Möglichkeiten bietet die Herstellung von Pfropfpolymerisaten, beispielsweise unter Verwendung chemisch modifizierter Stärke, Cellulose und Polyvinylalkohol nach DE-OS-26 12 846.

Häufig werden der Monomerlösung feinteilige Pulver zugesetzt, um beispielsweise die Eigenschaften des Superabsorbers zu beeinflussen oder um bestimmte, bei der Produktion von Superabsorbern anfallende Nebenprodukte zu rezyklieren. So beschreibt beispielsweise die EP-A-0 513 780 das Vermischen der Monomerlösung mit feinteiligen Superabsorberpartikeln, die bei der Herstellung von Superabsorbern als Nebenprodukt anfallen und auf diese Art und Weise rezykliert werden können. Gemäß der Lehre der EP-A-0 513 780 werden die feinteiligen Superabsorberpartikeln in einfachen, sich um eine vertikale oder horizontale Achse drehenden Mischtrommeln mit der Monomerlösung vermischt.

Der Nachteil der aus dem Stand der Technik bekannten Mischverfahren, bei denen feinteilige Pulver mit der Monomerlösung vermischt werden, besteht jedoch insbesondere darin, dass diese lediglich eine inhomogene Verteilung der feinteiligen Pulver in der Monomerlösung ermöglichen. Dies gilt insbesondere im Fall von Feinteilchen wie etwa feinteiligen Superabsorberpartikeln, die sich nur schwer in der Monomerlösung dispergieren lassen. Eine inhomogene Verteilung der feinteiligen Pulvern in der Monomerlösung führt jedoch dazu, dass die feinteiligen Pulver auch in dem nach der Polymerisation erhaltenen Polymergel und letztendlich auch in dem nach der Zerkleinerung und Trocknung des Polymergels erhaltenen Superabsorber inhomogen verteilt sind. Diese inhomogene Verteilung der feinteiligen Pulver im Endprodukt führt dann letztendlich auch zu inhomogenen Produkteigenschaften. Neben der inhomogenen Verteilung der Feinteilchen in der Monomerlösung ist das in EP-A-0 513 780 beschriebene Verfahren auch in sofern nachteilig, als dass es nur das Einarbeiten von sehr geringen Mengen an feinteiligem Superabsorber in die Monomerlösung erlaubt. Darüber hinaus setzen sich die mittels herkömmlicher Mischvorrichtungen eingebrachten feinteiligen Superabsorberpartikel in der Monomerlösung sehr schnell ab. Um dem entgegenzutreten, müssen vergleichsweise hohe Initiatormengen eingesetzt werden, um die Polymerisation zügig zu starten.

EP 0 692 514 A1 beschreibt ein Verfahren zur Herstellung eines wasserabsorbierenden, auf säuregruppenhaltigen Monomeren basierenden Polymergebildes, beinhaltend die folgenden Verfahrensschritte:
i) Bereitstellen einer Monomerlösung beinhaltend das gegebenenfalls teilneutralisierte, säuregruppenhaltige Monomer;
ii) Vermischen der Monomerlösung mit Feinteilchen, welche zu mindestens 90 Gew.-%, bezogen auf das Gesamtgewicht der Feinteilchen, aus Partikeln mit einer Partikelgröße von weniger als 850 Mikrometer bestehen, unter Erhalt einer mit Feinteilchen vermischen Monomerlösung;
wobei das Vermischen in Verfahrensschritt ii) in einem die Monomerlösung enthaltenden Mischer erfolgt, in dem ein erster Strom aus Feinteilchen auf ein rotierendes Mischwerkzeug geleitet wird. Bei der Mischvorrichtung handelt es sich um einen Doppel-Z-Kneter mit Austragsschnecke der Firma Winkworth.

Der vorliegenden Erfindung lag die Aufgabe zugrunde, die sich aus dem Stand der Technik ergebenden Nachteile im Zusammenhang mit dem Vermischen von feinteiligen Pulvern und vorzugsweise wässrigen Monomerlösung, insbesondere wässrigen Acrylsäurelösungen zu überwinden.

Insbesondere lag der vorliegenden Erfindung die Aufgabe zugrunde, ein Verfahren zur Herstellung wasserabsorbierender Polymergebilde anzugeben, mit dem es möglich ist, Feinteilchen, beispielsweise feinteilige Superabsorberpartikeln, in Monomerlösungen einzuarbeiten. Das Verfahren soll sich insbesondere dazu eignen, feinteilige Superabsorber zu rezyklieren und dabei Superabsorber mit möglichst homogenen Absorptionseigenschaften zu erhalten. Gegenüber den aus dem Stand der Technik bekannten Verfahren soll es auch das Einarbeiten von größeren Mengen an Superabsorberfeinteilchen, beispielsweise von Mengen von mehr als 5 Gew.-%, bezogen auf das Gewicht der Monomerlösung, ermöglichen.

Auch lag der vorliegenden Erfindung die Aufgabe zugrunde, wasserabsorbierende Polymergebilde bereitzustellen, welche sich besonders gut in Hygieneartikeln mit hohem Superabsorberanteil einsetzen lassen. Die wasserabsorbierenden Polymere sollten dabei neben einer vorteilhaft hohen Absorptionsgeschwindigkeit eine besonders hohe Absorption unter einer Druckbelastung, eine besonders hohe Retention und eine besonders hohe Permeabilität aufweisen.

Einen Beitrag zur Lösung der eingangs genannten Aufgaben leistet ein Verfahren zur Herstellung eines wasserabsorbierenden, auf säuregruppenhaltigen Monomeren basierenden Polymergebildes, beinhaltend die Verfahrensschritte:
i) Bereitstellen einer vorzugsweise wässrigen Monomerlösung beinhaltend das gegebenenfalls teilneutralisierte, säuregruppenhaltige Monomer;
ii) vorzugsweise kontinuierliches Vermischen der vorzugsweise wässrigen Monomerlösung mit Feinteilchen, welche zu mindestens 90 Gew.-%, besonders bevorzugt zu mindestens 95 Gew.-% und am meisten bevorzugt zu mindestens 99 Gew.-%, jeweils bezogen auf das Gesamtgewicht der Feinteilchen, aus Partikeln mit einer Partikelgröße von weniger als 850 µm, besonders bevorzugt weniger als 600 µm, noch mehr bevorzugt weniger als 450 µm, noch mehr bevorzugt weniger als 300 µm und am meisten bevorzugt weniger als 150 µm bestehen, unter Erhalt einer mit Feinteilchen vermischten Monomerlösung;
wobei das Vermischen im Verfahrensschritt ii) in einem Mischer erfolgt, in dem ein erster Strom aus den Feinteilchen und mindestens ein weiterer Strom aus der Monomerlösung aus verschiedenen Richtungen gleichzeitig auf ein rotierendes Mischwerkzeug geleitet werden, mit den Merkmalen des Anspruch 1.

Völlig überraschend, dafür aber nicht minder vorteilhaft, hat sich herausgestellt, dass sich Feinteilchen, insbesondere feinteilige Superabsorberpartikel, unter Verwendung bestimmter Mischvorrichtungen besonders homogen in Monomerlösungen dispergieren lassen. Auch können im Vergleich zu den aus dem Stand der Technik bekannten Verfahren des Einbringens von Feinteilchen in Monomerlösungen deutlich geringere Initiatormengen eingesetzt werden, da sie die dispergierten Feinteilchen deutlich langsamer absetzten. Als besonders vorteilhaft hat sich das erfindungsgemäße Verfahren in Fällen erwiesen, in denen die Polymerisation des Monomers auf einem Band erfolgt, also unter Bedingungen, unter denen während der Polymerisation kein weiteres Durchmischen der Monomerlösung mittels einer Rühr- oder Knetvorrichtung erfolgt. Im Falle des Dispergierens von feinteiligen Superabsorberpartikeln in Monomerlösungen wurde insbesondere festgestellt, dass die Geschwindigkeit, mit der wasserabsorbierende Polymergebilde wässrige Flüssigkeiten zu absorbieren vermögen, signifikant dadurch gesteigert werden kann, dass der Monomerlösung, welche zur Herstellung der wasserabsorbierenden Polymergebilde eingesetzt wird, diese feinteiligen Superabsorberpartikel unter Einsatz dieser Mischvorrichtung unter wohl definierten Mischungsbedingungen zugesetzt werden. Insbesondere hat sich gezeigt, dass die sogenannte "*Free Swell Rate* - *FSR*" in Abhängigkeit von der Mischfrequenz gezielt gesteigert werden kann.

Erfindungsgemäß bevorzugte Polymergebilde sind Fasern, Schäume oder Teilchen, wobei Fasern und Teilchen bevorzugt und Teilchen besonders bevorzugt sind.

Erfindungsgemäß bevorzugte Polymerfasern sind so dimensioniert, dass sie in oder als Garne für Textilien und auch direkt in Textilien eingearbeitet werden können. Es ist erfindungsgemäß bevorzugt, dass die Polymerfasern eine Länge im Bereich von 1 bis 500 mm, bevorzugt 2 bis 500 mm und besonders bevorzugt 5 bis 100 mm und einen Durchmesser im Bereich von 1 bis 200 Denier, bevorzugt 3 bis 100 Denier und besonders bevorzugt 5 bis 60 Denier besitzen.

Erfindungsgemäß bevorzugte Polymerteilchen sind so dimensioniert, dass sie eine mittlere Teilchengröße gemäß ERT 420.2-02 im Bereich von 10 bis 3000 µm, vorzugsweise 20 bis 2000 µm und besonders bevorzugt 150 bis 850 µm aufweisen. Dabei ist es insbesondere bevorzugt, dass der Anteil der Polymerteilchen mit einer Partikelgröße in einem Bereich von 300 bis 600 µm mindestens 30 Gew.-%, besonders bevorzugt mindestens 40 Gew.-% und am meisten bevorzugt mindestens 50 Gew.-%, bezogen auf das Gesamtgewicht der nachvernetzten, wasserabsorbierenden Polymerteilchen, beträgt.

Im Verfahrensschritt i) des erfindungsgemäßen Verfahrens wird zunächst eine vorzugsweise wässrige Monomerlösung beinhaltend das gegebenenfalls teilneutralisierte, säuregruppenhaltige Monomer bereitgestellt, wobei die vorzugsweise wässrige Monomerlösung vorzugsweise
- ein polymerisierbares, monoethylenisch ungesättigtes, eine Säuregruppe enthaltendes Monomer (α1) oder ein Salz davon oder ein polymerisierbares, monoethylenisch ungesättigtes, einen protonierten oder quarternierten Stickstoff beinhaltendes Monomer, oder eine Mischung dieser Monomere, wobei ein polymerisierbares, monoethylenisch ungesättigtes, säuregruppenhaltiges Monomer besonders bevorzugt und Acrylsäure am meisten bevorzugt ist,
- gegebenenfalls ein mit dem Monomer (α1) polymerisierbares, monoethylenisch ungesättigtes Monomer (α2), sowie
- gegebenenfalls mindestens einen Vernetzer (α3)
beinhaltet.

Die monoethylenisch ungesättigten, säuregruppenhaltigen Monomere (α1) können teilweise oder vollständig, bevorzugt teilweise neutralisiert sein. Vorzugsweise sind die monoethylenisch ungesättigten, säuregruppenhaltigen Monomere zu mindestens 25 Mol-%, besonders bevorzugt zu mindestens 50 Mol-% und darüber hinaus bevorzugt zu 50-80 Mol-% neutralisiert. In diesem Zusammenhang wird auf DE 195 29 348 A1 verwiesen. Die Neutralisation kann teilweise oder ganz auch nach der Polymerisation erfolgen. Ferner kann die Neutralisation mit Alkalimetallhydroxiden, Erdalkalimetallhydroxiden, Ammoniak sowie Carbonaten und Bicarbonaten erfolgen. Daneben ist jede weitere Base denkbar, die mit der Säure ein wasserlösliches Salz bildet. Auch eine Mischneutralisation mit verschiedenen Basen ist denkbar. Bevorzugt ist die Neutralisation mit Ammoniak und Alkalimetallhydroxiden, besonders bevorzugt mit Natriumhydroxid und mit Ammoniak.

Ferner können bei einem durch das erfindungsgemäße Verfahren erhältlichen wasserabsorbierenden Polymergebilde die freien Säuregruppen überwiegen, so dass dieses Polymergebilde einen im sauren Bereich liegenden pH-Wert aufweist. Dieses saure wasserabsorbierende Polymergebilde kann durch ein Polymergebilde mit freien basischen Gruppen, vorzugsweise Amingruppen, das im Vergleich zu dem sauren Polymergebilde basisch ist, mindestens teilweise neutralisiert werden. Diese Polymergebilde werden in der Literatur als "*Mixed-Bed Ion-Exchange Absorbent Polymers*" (MBIEA-Polymere) bezeichnet und sind unter anderem in der WO 99/34843 A1 offenbart. In der Regel stellen MBIEA-Polymere eine Zusammensetzung dar, die zum einen basische Polymergebilde, die in der Lage sind, Anionen auszutauschen, und andererseits ein im Vergleich zu dem basischen Polymergebilde saures Polymergebilde, das in der Lage ist, Kationen auszutauschen, beinhalten. Das basische Polymergebilde weist basische Gruppen auf und wird typischerweise durch die Polymerisation von Monomeren (α1) erhalten, die basische Gruppen oder Gruppen tragen, die in basische Gruppen umgewandelt werden können. Bei diesen Monomeren handelt es sich vor allen Dingen um solche, die primäre, sekundäre oder tertiäre Amine oder die entsprechenden Phosphine oder mindestens zwei der vorstehenden funktionellen Gruppen aufweisen. Zu dieser Gruppe von Monomeren gehören insbesondere Ethylenamin, Allylamin, Diallylamin, 4-Aminobuten, Alkyloxycycline, Vinylformamid, 5-Aminopenten, Carbodiimid, Formaldacin, Melamin und dergleichen, sowie deren sekundäre oder tertiäre Aminderivate.

Bevorzugte monoethylenisch ungesättigte, säuregruppenhaltige Monomere (α1) sind vorzugsweise diejenigen Verbindungen, die in der WO 2004/037903 A2 als ethylenisch ungesättigte, säuregruppenhaltige Monomere (α1) genannt werden. Besonders bevorzugte monoethylenisch ungesättigte, säuregruppenhaltige Monomere (α1) sind Acrylsäure und Methacrylsäure, wobei Acrylsäure am meisten bevorzugt ist.

Als mit den Monomeren (α1) copolymerisierbare, monoethylenisch ungesättigte Monomere (α2) können Acrylamide, Methacrylamide oder Vinylamide eingesetzt werden.

Bevorzugte (Meth)acrylamide sind neben Acrylamid und Methacrylamid alkylsubstituierte (Meth)acrylamide oder aminoalkylsubstituierte Derivate des (Meth)acrylamids, wie N-Methylol(meth)acrylamid, N,N-Dimethylamino-(meth)acrylamid, Dimethyl(meth)acrylamid oder Diethyl(meth)acrylamid. Mögliche Vinylamide sind beispielsweise N-Vinylamide, N-Vinylformamide, N-Vinylacetamide, N-Vinyl-N-Methylacetamide, N-Vinyl-N-methylformamide, Vinylpyrrolidon. Unter diesen Monomeren besonders bevorzugt ist Acrylamid.

Weiterhin können als mit den Monomeren (α1) copolymerisierbare, monoethylenisch ungesättigte Monomere (α2) wasserlösliche Monomere eingesetzt werden. In diesem Zusammenhang sind insbesondere Alkoxypolyalkylenoxid(meth)-acrylate wie Methoxypolyethylenglykol(meth)acrylate bevorzugt.

Als monoethylenisch ungesättigte, mit den Monomeren (α1) copolymerisierbare Monomere (α2) sind weiterhin in Wasser dispergierbare Monomere denkbar. Als in Wasser dispergierbare Monomere sind Acrylsäureester und Methacrylsäureester, wie Methyl(meth)acrylat, Ethyl(meth)acrylat, Propyl(meth)acrylat oder Butyl(meth)acrylat bevorzugt.

Die monoethylenisch ungesättigten, mit (α1) copolymerisierbaren Monomere (α2) können auch Methylpolyethylenglykolallylether, Vinylacetat, Styrol und Isobutylen umfassen.

Als Vernetzer (α3) werden vorzugsweise diejenigen Verbindungen eingesetzt, die in der WO 2004/037903 A2 als Vernetzer (α3) genannt werden. Unter diesen Vernetzern sind wasserlösliche Vernetzer besonders bevorzugt. Am meisten bevorzugt sind dabei N,N'-Methylenbisacrylamid, Polyethylenglykoldi-(meth)acrylate, Triallylmethylammoniumchlorid, Tetraallylammoniumchlorid sowie mit 9 Mol Ethylenoxid pro Mol Acrylsäure hergestelltes Allylnonaethylenglykolacrylat.

Neben den Monomeren (α1) und gegebenenfalls (α2) sowie gegebenenfalls dem Vernetzer (α3) kann die Monomerlösung auch wasserlösliche Polymere (α4) beinhalten. Bevorzugte wasserlösliche Polymere (α4) umfassend teil- oder vollverseiften Polyvinylalkohol, Polyvinylpyrrolidon, Stärke oder Stärkederivate, Polyglykole oder Polyacrylsäure. Das Molekulargewicht dieser Polymere ist unkritisch, solange sie wasserlöslich sind. Bevorzugte wasserlösliche Polymere (α4) sind Stärke oder Stärkederivate oder Polyvinylalkohol. Die wasserlöslichen Polymere (α4), vorzugsweise synthetische wie Polyvinylalkohol, können nicht nur als Pfropfgrundlage für die zu polymerisierenden Monomeren dienen. Denkbar ist auch, diese wasserlöslichen Polymere erst nach der Polymerisation mit dem Polymergel oder dem bereits getrockneten, wasserabsorbierenden Polymergel zu vermischen.

Weiterhin kann die Monomerlösung auch Hilfsmittel (α5) enthalten, wobei zu diesen Hilfsmitteln insbesondere die für die Polymerisation gegebenenfalls erforderlichen Initiatoren, Komplexbildner, wie beispielsweise EDTA, gehören.

Als Lösungsmittel für die Monomerlösung kommen Wasser, organische Lösungsmittel oder Gemische aus Wasser und organischen Lösungsmitteln in Betracht, wobei die Wahl des Lösungsmittels insbesondere auch von der Art und Weise der Polymerisation abhängt. Erfindungsgemäß ganz besonders bevorzugt ist der Einsatz von Wasser als Lösungsmittel.

Die relative Menge an Monomeren (α1) und (α2) sowie an Vernetzern (α3) und wasserlöslichen Polymeren (α4) und Hilfsmittel (α5) in der Monomerlösung wird vorzugsweise so gewählt, dass das durch das Verfahren erhaltene wasserabsorbierende Polymergebilde
- zu 20-99,999 Gew.-%, bevorzugt zu 55-98,99 Gew.-% und besonders bevorzugt zu 70-98,79 Gew.-% auf den Monomeren (α1),
- zu 0-80 Gew.-%, vorzugsweise zu 0-44,99 Gew.-% und besonders bevorzugt zu 0,1-44,89 Gew.-% auf den Monomeren (α2),
- zu 0-5 Gew.-%, vorzugsweise zu 0,001-3 Gew.-% und besonders bevorzugt zu 0,01-2,5 Gew.-% auf den Vernetzern (α3),
- zu 0-30 Gew.-%, vorzugsweise zu 0-5 Gew.-% und besonders bevorzugt zu 0,1-5 Gew.-% auf den wasserlöslichen Polymeren (α4),
- zu 0-20 Gew.-%, vorzugsweise zu 0-10 Gew.-% und besonders bevorzugt zu 0,1-8 Gew.-% auf den Hilfsmitteln (α5), und
- zu 0,5-25 Gew.-%, vorzugsweise zu 1-10 Gew.-% und besonders bevorzugt zu 3-7 Gew.-% auf Wasser (α6)
basiert, wobei die Summe der Gewichtsmengen (α1) bis (α6) 100 Gew.-% beträgt.

Optimale Werte für die Konzentration insbesondere der Monomere, Vernetzer und wasserlöslichen Polymere in der Monomerlösung können durch einfache Vorversuche ermittelt oder aber auch dem Stand der Technik, insbesondere den Druckschriften DE 35 03 458 A1, DE 42 44 548 A1, DE 40 20 780 C1, US 4,076,663, US 4,286,082, DE 27 06 135 A1, DE 43 33 056 A1 und DE 44 18 818 A1 entnommen werden.

Im Verfahrensschritt ii) des erfindungsgemäßen Verfahrens wird nun die vorzugsweise wässrige Monomerlösung mit Feinteilchen, welche zu mindestens 90 Gew.-%, besonders bevorzugt zu mindestens 95 Gew.-% und am meisten bevorzugt zu mindestens 99 Gew.-%, jeweils bezogen auf das Gesamtgewicht der Feinteilchen, aus Partikeln mit einer Partikelgröße von weniger als 850 µm, besonders bevorzugt weniger als 600 µm, noch mehr bevorzugt weniger als 450 µm, noch mehr bevorzugt weniger als 300 µm und am meisten bevorzugt weniger als 150 µm bestehen, vermischt. Besonders bevorzugt bestehen die Feinteilchen zu mindestens 95 Gew.-% aus Partikeln mit einer Partikelgröße von weniger als 150 µm.

Bei den Feinteilchen handelt es sich vorzugsweise um organische oder anorganische Feinteilchen, wobei des erfindungsgemäß besonders bevorzugt ist, wenn die Feinteilchen einen Wassergehalt von weniger als 30 Gew.-%, besonders bevorzugt weniger als 25 Gew.-% und am meisten bevorzugt weniger als 5 Gew.-%, bezogen auf das Gesamtgewicht der Feinteilchen, aufweisen.

Als organisches Feinteilchen kann jedes dem Fachmann bekannte, partikuläre organische Material eingesetzt werden, welches üblicherweise zur Modifizierung der Eigenschaften wasserabsorbierender Polymere eingesetzt wird. Zu den bevorzugten organischen Feinteilchen gehören Cyclodextrine oder deren Derivate sowie Polysaccharide. Außerdem sind Cellulose und Cellulosederivate wie CMC, Celluloseether bevorzugt.

Als Cyclodextrine oder Cyclodextrinderivate sind dabei diejenigen Verbindungen bevorzugt, die in DE-A-198 25 486 auf der Seite 3, Zeile 51 bis Seite 4, Zeile 61 offenbart sind. Besonders bevorzugte Cyclodextrine sind nicht derivatisierte α-, β-, γ- oder δ-Cyclodextrine.

Als anorganisches Feinteilchen kann jedes dem Fachmann bekannte, partikuläre anorganische Material eingesetzt werden, welches üblicherweise zur Modifizierung der Eigenschaften wasserabsorbierender Polymere eingesetzt wird. Zu den bevorzugten anorganischen Feinteilchen gehören Carbonate, wie etwa Natrium-, Kalium-, Ammonium-, Magnesium - oder Calciumcarbonat, wobei die Carbonate gegebenenfalls granulierte Carbonate sein können, und wobei die Carbonate gegebenenfalls auch modifiziert, beispielsweise mittels Polyalkylenglykolen eingekapselt sein können, wie dies beispielsweise in US 2005/0137546 A1 beschrieben ist, Sulfate wie Na₂SO₄, Lactate wie etwa Natriumlactat, Silikate, insbesondere Gerüstsilikate wie Zeolithe oder Silikate, die durch Trocknung wässriger Kieselsäurelösungen oder Kieselsolen erhalten wurden, beispielsweise die kommerziell erhältlichen Produkte wie Fällungskieselsäuren und pyrogene Kieselsäuren, beispielsweise Aerosile mit einer Teilchengröße im Bereich von 5 bis 50 nm, vorzugsweise im Bereich von 8 bis 20 nm wie "Aerosil 200" der Evonik Industries AG, Aluminate, Titandioxide, Zinkoxide, Tonmaterialien und weitere dem Fachmann geläufige Mineralien sowie kohlenstoffhaltige anorganische Materialien.

Bevorzugte Silikate sind alle natürlichen oder synthetischen Silikate, die in Holleman und Wiberg, Lehrbuch der Anorganischen Chemie, Walter de Gruyter-Verlag, 91.-100. Auflage, 1985 auf den Seiten 750 bis 783, als Silikate offenbart sind.

Besonders bevorzugt Silikate sind die Zeolithe. Als Zeolithe können alle dem Fachmann bekannten synthetischen oder natürlichen Zeolithe eingesetzt werden. Bevorzugte natürliche Zeolithe sind Zeolithe aus der Natrolith-Gruppe, der Harmoton-Gruppe, der Mordenit-Gruppe, der Chabasit-Gruppe, der Faujasit-Gruppe (Sodalith-Gruppe) oder der Analcit-Gruppe. Beispiele für natürliche Zeolithe sind Analcim, Leucit, Pollucite, Wairakite, Bellbergite, Bikitaite, Boggsite, Brewsterite, Chabasit, Willhendersonite, Cowlesite, Dachiardite, Edingtonit, Epistilbit, Erionit, Faujasit, Ferrierite, Amicite, Garronite, Gismondine, Gobbinsite, Gmelinit, Gonnardite, Goosecreekit, Harmoton, Phillipsit, Wellsite, Clinoptilolit, Heulandit, Laumontit, Levyne, Mazzite, Merlinoite, Montesommaite, Mordenit, Mesolit, Natrolit, Scolecit, Offretite, Paranatrolite, Paulingite, Perlialite, Barrerite, Stilbit, Stellerit, Thomsonit, Tschernichite oder Yugawaralite. Bevorzugte synthetische Zeolithe sind Zeolith A, Zeolith X, Zeolith Y, Zeolith P oder das Produkt ABSCENTS.

Als Zeolithe können Zeolithe des so genannten "mittleren" Typs eingesetzt werden, bei denen das SiO₂/AlO₂-Verhältnis kleiner als 10 ist, besonders bevorzugt liegt das SiO₂/AlO₂-Verhältnis dieser Zeolithe in einem Bereich von 2 bis 10. Neben diesen "mittleren" Zeolithen können weiterhin Zeolithe des "hohen" Typs eingesetzt werden, zu denen beispielsweise die bekannten "Molekularsieb"-Zeolithe des Typs ZSM sowie β-Zeolith gehören. Diese "hohen" Zeolithe sind vorzugsweise durch ein SiO₂/AlO₂-Verhältnis von mindestens 35, besonders bevorzugt von einem SiO₂/AlO₂-Verhältnis in einem Bereich von 200 bis 500 gekennzeichnet.

Als Aluminate werden vorzugsweise die in der Natur vorkommenden Spinelle, insbesondere gewöhnlicher Spinell, Zinkspinell, Eisenspinell oder Chromspinell eingesetzt.

Bevorzugte Titandioxide ist das reine Titandioxid in den Kristallformen Rutil, Anatas und Brookit, sowie eisenhaltige Titandioxide wie beispielsweise Ilmenit, calciumhaltige Titandioxide wie Titanit oder Perowskit.

Bevorzugte Tonmaterialien sind diejenigen, die in Holleman und Wiberg, Lehrbuch der Anorganischen Chemie, Walter de Gruyter-Verlag, 91.-100. Auflage, 1985 auf den Seiten 783 bis 785, als Tonmaterialien offenbart sind. Besonders Besonders bevorzugte Tonmaterialien sind Kaolinit, Illit, Halloysit, Montmorillonit sowie Talk.

Weiterhin sind als anorganische Feinteilchen die Metallsalze der Mono-, Oligo-und Polyphosphorsäuren erfindungsgemäß bevorzugt. Hierunter sind insbesondere die Hydrate bevorzugt, wobei die Mono- bis Deca-Hydrate und Tri-Hydrate besonders bevorzugt sind. Als Metalle kommen insbesondere Alkali- und Erdalkalimetalle in Betracht, wobei die Erdalkalimetalle bevorzugt sind. Hierunter sind Mg und Ca bevorzugt und Mg besonders bevorzugt. Im Zusammenhang mit Phosphaten, Phosphorsäuren und deren Metallverbindungen wird auf Holleman und Wiberg, Lehrbuch der Anorganischen Chemie, Walter de Gruyter-Verlag, 91.-100. Auflage, 1985, auf den Seiten 651 bis 669 verwiesen.

Bevorzugte kohlenstoffhaltige, jedoch nicht organische Feinteilchen sind diejenigen reinen Kohlenstoffe, die in Holleman und Wiberg, Lehrbuch der Anorganischen Chemie, Walter de Gruyter-Verlag, 91.-100. Auflage, 1985 auf den Seiten 705 bis 708 als Graphite genannt sind. Besonders bevorzugte Graphite sind künstliche Graphite wie beispielsweise Koks, Pyrographit, Aktivkohle oder Ruß.

Gemäß einer besonders bevorzugten Ausführungsform des erfindungsgemäßen Verfahrens handelt es sich bei den Feinteilchen jedoch um wasserabsorbierende, auf säuregruppenhaltigen Monomeren basierende, feinteilige Polymergebilde (sogenannte "Superabsorberfeinteilchen"), die bei Transport- oder Siebschritten im Rahmen der Herstellung und Konfektionierung von Superabsorbern anfallen. Im Rahmen üblicher Einsatzmöglichkeiten von Superabsorbern werden die Superabsorber in der Regel auf eine Korngrößen von etwa 150 bis etwa 850 µm vermahlen. Aufgrund der Sprödheit des Materials entsteht bei diesem Vorgang jedoch ein erheblicher Anteil an Partikeln mit einer Korngröße von weniger als 150 µm. Diese Partikel werden jedoch häufig vor dem Einsatz der Superabsorber entfernt, da sie sich nachteilig auf die Permeabilitätseigenschaften des Superabsorbermaterials auswirken und zudem die Staubbildung begünstigen, wenn das Superabsorbermaterial beispielsweise bei der Herstellung von Hygieneartikeln in Förderanlagen transportiert wird. In der Regel geschieht dieses Abtrennen der Feinteilchen durch Sieben.

Die im Verfahrensschritt ii) des erfindungsgemäßen Verfahren eingesetzten wasserabsorbierenden, auf säuregruppenhaltigen Monomeren basierenden feinteiligen Polymergebilde können hinsichtlich der anteilsmäßigen Zusammensetzung aus den vorstehend beschriebenen Komponenten (α1) bis (α6) identisch mit den durch das erfindungsgemäße Verfahren erhältlichen, wasserabsorbierenden Polymergebilde oder aber von diesen verschieden sein. Im ersten Fall stammen die wasserabsorbierenden, auf säuregruppenhaltigen Monomeren basierenden feinteiligen Polymergebilde aus einem Verfahren, bei dem wasserabsorbierende Polymergebilde hergestellt wurden, welche in ihrer chemischen Zusammensetzung identisch sind mit denen, die bei demselben Verfahren hergestellt werden, bei dem die wasserabsorbierenden, auf säuregruppenhaltigen Monomeren basierenden feinteiligen Polymergebilde der Monomerlösung zugesetzt werden. Im zweiten Fall stammen die wasserabsorbierenden, auf säuregruppenhaltigen Monomeren basierenden feinteiligen Polymergebilde entsprechend aus einem Verfahren, bei dem wasserabsorbierende Polymergebilde hergestellt wurden, welche in ihrer chemischen Zusammensetzung nicht identisch sind mit denen, die bei dem Verfahren hergestellt werden, bei dem die wasserabsorbierenden, auf säuregruppenhaltigen Monomeren basierenden feinteiligen Polymergebilde der Monomerlösung zugesetzt werden. Darüber hinaus können die auf säuregruppenhaltigen Monomeren basierenden feinteiligen Polymergebilde oberflächennachvernetzt oder nicht oberflächennachvernetzt sein. Denkbar ist auch der Einsatz von Mischungen aus oberflächennachvemetzten und nicht oberflächennachvernetzten, auf säuregruppenhaltigen Monomeren basierenden, feinteiligen Polymergebilden.

Vorzugsweise liegt die Menge an Feinteilchen, besonders bevorzugt an wasserabsorbierenden, auf säuregruppenhaltigen Monomeren basierenden feinteiligen Polymergebilden, welche im Verfahrensschritt ii) des erfindungsgemäßen Verfahrens mit der vorzugsweise wässrigen Monomerlösung vermischt werden, in einem Bereich von 0,1 bis 15 Gew.-%, besonders bevorzugt in einem Bereich von 0,5 bis 10 Gew.-% und am meisten bevorzugt in einem Bereich von 3 bis 8 Gew.-%, jeweils bezogen auf das Gewicht der vorzugsweise wässrigen Monomerlösung.

Das erfindungsgemäße Verfahren ist nun dadurch gekennzeichnet, dass das Vermischen im Verfahrensschritt ii) in einem Mischer erfolgt, in dem ein erster Strom aus den Feinteilchen und mindestens ein weiterer Strom aus der Monomerlösung aus verschiedenen Richtungen gleichzeitig auf ein rotierendes Mischwerkzeug geleitet werden. Eine solche Art und Weise des Vermischens ist in Mischern des sogenannten "*Rotor-Stator-Typs*" realisiert. Solche Rotor-Stator-Systeme umfassen in ihrem Mischraum einen in der Regel zylinderförmig ausgebildeten, nichtrotierenden Stator, in dessen Zentrum der ebenfalls vorzugsweise zylinderförmig ausgebildete Rotor rotiert. Sowohl die Wandungen des Rotors als auch die des Stators sind üblicherweise durch Aussparungen, beispielsweise Aussparungen in Form von Schlitzen, gekennzeichnet, durch welche die Mischung aus Monomerlösung und Feinteilchen hindurch gesaugt und auf diese Weise besonders hohen Scherkräften ausgesetzt wird.

Dabei ist es erfindungsgemäß vorgesehen, dass der erste Strom aus den Feinteilchen und der mindestens eine weitere Strom aus der Monomerlösung einen Winkel δ in einem Bereich von 60 bis 120°, besonders bevorzugt in einem Bereich von 75 bis 105°, darüber hinaus bevorzugt in einem Bereich von 85 bis 95° und am meisten bevorzugt von etwa 90° bilden. Auch ist es erfindungsgemäß bevorzugt, dass der Strom aus der Mischung aus der Monomerlösung und den Feinteilchen, welcher den Mischer verlässt, und der erste Strom aus den feinteiligen Polymergebilden einen Winkel ε in einem Bereich von 60 bis 120°, besonders bevorzugt in einem Bereich von 75 bis 105°, noch mehr bevorzugt in einem Bereich von 85 bis 95° und am meisten bevorzugt von etwa 90° bilden.

Vorzugsweise werden der erste Strom aus den Feinteilchen und der mindestens eine weitere Strom aus der Monomerlösung vorzugsweise kontinuierlich über einen Zeitraum von mindestens 10 Minuten, noch mehr bevorzugt mindestens 120 Minuten und am meisten bevorzugt mindestens 240 Minuten gleichzeitig auf das rotierende Mischwerkzeug geleitet.

Eine solche Art und Weise des Vermischens lässt sich insbesondere dadurch realisieren, dass als Mischer ein Mischer mit einem vertikalen Zuführschacht für die Feinteilchen und mit wenigstens einem um eine vertikale Achse rotierenden Mischwerkzeug sowie mit mindestens einer seitlichen Zufuhr für die vorzugsweise wässrige Monomerlösung gewählt wird. Ein solcher Mischer ist beispielsweise in der DE-A-25 20 788 und in der DE-A-26 17 612 beschrieben.

Bei der Verwendung der in der DE-A-25 20 788 beschriebenen Mischvorrichtung werden die Feinteilchen mittels eines als Zuführschacht dienenden Fallrohres in einen das untere Ende dieses Fallrohres umschließenden Düsenkörper geleitet, der sich in vertikaler Richtung von oben nach unten zu der Mündung des Fallrohres hin verengt, aber auch gegenüber dieser Mündung noch einen Seitenabstand einhält. Die zuzumischende, vorzugsweise wässrige Monomerlösung wird über den oberen breiteren Bereich dieses Düsenkörpers geleitet, so dass die Monomerlösung im unteren Bereich des Fallrohres zunächst wie die Feinteilchen etwa vertikal von oben nach unten strömt und dabei durch die Verringerung des Querschnittes ihre Strömungsgeschwindigkeit erhöht. Dabei reicht dieser Düsenkörper in vertikaler Richtung noch etwas über das untere Ende des Fallrohres hinaus und darunter befindet sich ein um eine vertikale Achse rotierender Mischteller als Mischwerkzeug. Vorzugsweise rotiert dieser Mischteller in einem Stator, wobei sowohl der Mischteller als auch der Stator mit Aussparungen versehen sind, durch welche die Mischung aus Feinteilchen und Monomerlösung hindurch gesaugt wird.

Bei der Verwendung der in der DE-A-26 17 612 beschriebenen Mischvorrichtung werden die Feinteilchen an einem im vertikalen Zustrom dieser Feinteilchen angeordneten, ventilartigen und verstellbaren Verschlusskörper vorbeigeleitet, unterhalb welchem etwa koaxial, also wiederum in vertikaler Richtung von oben nach unten wirkende Düsen angeordnet sind, aus denen die vorzugsweise wässrige Monomerlösung zum Vermischen mit den Feinteilchen austritt. Unter einem darunter befindlichen rotierenden und mit Mischwerkzeugen versehenen Mischkorb gelangt diese Vormischung über einen Trichter zu einem zweiten Mischraum, in welchem weitere Düsen zum Zuführen der Monomerlösung angeordnet sind, die schräg von oben nach unten gerichtet sind. Darunter gelangt die Gesamtmischung auf ein weiteres Mischwerkzeug in Form eines Mischtellers oder Mischkorbes, der die Gesamtmischung zunächst radial nach außen schleudert, bevor sie dann wiederum nach unten abgezogen werden kann.

Gemäß einer besonders bevorzugten Ausführungsform des erfindungsgemäßen Verfahrens ist das Mischwerkzeug als in vertikaler Förderrichtung der Feinteilchen von oben nach unten wirksame Flügel ausgebildet oder weist derartige Flügel auf, wobei die Zufuhr der vorzugsweise wässrigen Monomerlösung zu dem Mischraum schräg oder radial von der Seite her im Förderbereich des Mischwerkzeugs angeordnet und der Bereich oberhalb des Mischwerkzeugs von einer Zufuhr von Monomerlösung frei ist. Eine solche, erfindungsgemäß besonders bevorzugte Mischvorrichtung ist in der DE-A-196 29 945 beschrieben.

In diesem Zusammenhang ist es weiterhin bevorzugt, dass oberhalb der Mischwerkzeuge oder des Mischraumes zwischen den Mischwerkzeugen und dem Zuführschacht für die Feinteilchen eine in Zuführrichtung der feinteiligen Polymergebilde wirkende Förderschnecke angeordnet ist, die den im wesentlichen trockenen Zuführschacht von dem nassen Mischbereich trennt, also den Querschnitt des Zuführschachtes oder seiner Fortsetzung praktisch vollständig - bis auf ein geringes Spiel gegenüber einer Wandung - ausfüllt. Auf diese Weise werden die Feinteilchen über eine Zwangsführung in den Mischraum eingebracht und dort mit der Monomerlösung vermischt. Die Förderschnecke kann dabei koaxial auf einer Fortsetzung der Antriebswelle für die Mischwerkzeuge angeordnet und von dem Antriebsmotor für die Mischwerkzeuge mitantreibbar sein. Weiterhin ist es besonders vorteilhaft, wenn unterhalb des Mischraumes eine koaxial auf der gleichen Antriebswelle angeordnete Dispergiereinrichtung angeordnet ist. Dadurch kann die in dem Mischraum gebildete Mischung aus der Monomerlösung und den Feinteilchen noch intensiver weitergemischt werden.

Derartige Mischvorrichtungen sind beispielsweise von der Firma IKA® Werke GmbH & Co. KG, Staufen, Deutschland, erhältlich, wobei von diesen Mischvorrichtungen insbesondere diejenigen bevorzugt sind, die unter den Bezeichnungen MHD 2000/4, MHD 2000/05, MHD 2000/10, MDH 2000/20, MHD 2000/30 und MHD 2000/50 erhältlich sind, wobei von diesen diejenige mit der Bezeichnung MHD 2000/20 am meisten bevorzugt ist. Diese Mischvorrichtungen, mit denen die Feinteilchen kontinuierlich mit der Monomerlösung vermischt werden, können mit einem maximalen Gesamtdurchsatz in einem Bereich von 100 bis zu 40.000 Litern pro Stunde kontinuierlich betrieben werden, wobei der maximale Durchsatz an Feinteilchen üblicherweise in einem Bereich von 50 bis zu etwa 11.000 Litern pro Stunde liegt.

Im Zusammenhang mit den vorstehend beschriebenen Mischvorrichtungen, insbesondere im Zusammenhang mit der unter der Bezeichnung MHD 2000/20 vertriebenen Mischvorrichtung, ist es insbesondere bevorzugt, dass diese mit einer Mischfrequenz (also mit einer Frequenz, mit der das Mischwerkzeug rotiert) in einem Bereich von 10 bis 100 Hertz, besonders bevorzugt in einem Bereich von 20 bis 85 Hertz und am meisten bevorzugt in einem Bereich von 25 bis 75 Hertz betrieben wird.

Neben den vorstehend beschriebenen Rotor-Stator-Systemen der Firma IKA® Werke können erfindungsgemäß auch Rotor-Stator-Systeme der Fima ystral GmbH, Ballrechten-Dottingen, insbesondere die unter der Bezeichnung "Conti TDS" vertriebene Mischvorrichtung, oder aber Rotor-Stator-Systeme der Firma Kinematika AG, Luttau, Schweiz, beispielsweise die unter der Bezeichnung Megatron® erhältlichen Mischsysteme, eingesetzt werden.

Üblicherweise beinhaltet das erfindungsgemäße Verfahren neben den vorstehend beschriebenen Verfahrensschritten i) und ii) weiterhin die Verfahrensschritte:
iii) radikalische Polymerisation des in der vorzugsweise wässrigen Monomerlösung enthaltenen, gegebenenfalls teilneutralisierten, säuregruppenhaltigen Monomers in Gegenwart eines Vernetzers unter Erhalt eines Polymergels,
iv) gegebenenfalls Zerkleinern des Polymergels,
v) Trocknen des gegebenenfalls zerkleinerten Polymergels unter Erhalt wasserabsorbierender Polymergebilde,
vi) gegebenenfalls Mahlen und Absieben der wasserabsorbierenden Polymergebilde,
vii) gegebenenfalls Oberflächennachvernetzung der gegebenenfalls gemahlenen und abgesiebten wasserabsorbierenden Polymergebilde.

Im Verfahrensschritt iii) des erfindungsgemäßen Verfahrens wird die im Verfahrensschritt ii) erhaltene, mit den Feinteilchen vermischte, vorzugsweise wässrige Monomerlösung unter Erhalt eines Polymergels radikalisch polymerisiert.

Die Lösungspolymerisation kann kontinuierlich oder diskontinuierlich erfolgen. Aus dem Stand der Technik ist ein breites Spektrum von Variationsmöglichkeiten hinsichtlich Reaktionsverhältnisse wie Temperaturen, Art und Menge der Initiatoren als auch der Reaktionslösung zu entnehmen. Typische Verfahren sind in den folgenden Patentschriften beschrieben: US 4,286,082, DE 27 06 135 A1, US 4,076,663, DE 35 03 458 A1, DE 40 20 780 C1, DE 42 44 548 A1, DE 43 33 056 A1, DE 44 18 818 A1.

Die Polymerisation wird wie allgemein üblich durch einen Initiator ausgelöst. Als Initiatoren zur Initiierung der Polymerisation können alle unter den Polymerisationsbedingungen Radikale bildende Initiatoren verwendet werden, die üblicherweise bei der Herstellung von Superabsorbern eingesetzt werden. Auch eine Initiierung der Polymerisation durch Einwirkung von Elektronenstrahlen auf die polymerisierbare, wässrige Mischung ist möglich. Die Polymerisation kann allerdings auch in Abwesenheit von Initiatoren der oben genannten Art durch Einwirkung energiereicher Strahlung in Gegenwart von Photoinitiatoren ausgelöst werden. Polymerisationsinitiatoren können in einer Lösung erfindungsgemäßer Monomere gelöst oder dispergiert enthalten sein. Als Initiatoren kommen sämtliche dem Fachmann bekannte in Radikale zerfallende Verbindungen in Betracht. Hierunter fallen insbesondere diejenigen Initiatoren, die bereits in der WO 2004/037903 A2 als mögliche Initiatoren genannt werden.

Besonders bevorzugt wird zur Herstellung der wasserabsorbierenden Polymergebilde ein Redoxsystem bestehend aus Wasserstoffperoxid, Natriumperoxodisulfat und Ascorbinsäure eingesetzt.

Die Initiatoren können grundsätzlich vor, während oder nach dem Vermischen der vorzugsweise wässrigen Monomerlösung mit den feinteiligen Polymergebilden zugesetzt werden, wobei der Zusatz der Initiatoren nach dem Vermischen besonders bevorzugt ist. Werden Initiatorsysteme aus mehr als einem Initiator eingesetzt, beispielsweise Initiatorsysteme bestehend aus Ascorbinsäure, Natriumperoxodisulfat und Wasserstoffperoxid, so ist es bevorzugt, dass diese erst nach dem Verlassen des Mischer vervollständigt werden, in dem mindestens eine der Komponenten derartiger Initiatorsysteme erst nach dem Verlassen der Mischvorrichtung der Mischung aus Monomerlösung und Feinteilchen zugesetzt wird.

Auch ist es vorteilhaft, die Monomerlösung vor der Polymerisation von Sauerstoff zu befreien, wobei dies beispielsweise durch das Einblasen von Inertgasen, insbesondere durch das Einblasen von Stickstoff, erfolgen kann. Dabei ist es grundsätzlich möglich, die Monomerlösung vor dem Eintritt in die Mischvorrichtung, in der Mischvorrichtung oder aber nach dem Verlassen der Mischvorrichtung von Sauerstoff zu befreien. Denkbar ist auch, die Monomerlösung sowohl vor dem Eintritt in die Mischvorrichtung als auch in der Mischvorrichtung und gegebenenfalls auch noch nach Verlassen der Mischvorrichtung von Sauerstoff zu befreien.

Weiterhin ist es gemäß einer besonderen Ausführungsform des erfindungsgemäßen Verfahrens bevorzugt, wenn zumindest die Verfahrensschritt ii) und iii) kontinuierlich erfolgen. Dieses kann dadurch geschehen, dass kontinuierlich die Monomerlösung mit den Feinteilchen mittels der vorstehend beschriebenen Mischvorrichtungen vermischt und die so erhaltene Mischung sodann kontinuierlich polymerisiert wird, in dem diese Mischung einer kontinuierlich arbeitenden Polymerisationsvorrichtung, beispielsweise einem Polymerisationsband, zugeführt wird.

Im Verfahrensschritt iv) des erfindungsgemäßen Verfahrens wird das im Verfahrensschritt iii) erhaltene Polymergel gegebenenfalls zerkleinert, wobei dieses Zerkleinern insbesondere dann erfolgt, wenn die Polymerisation mittels einer Lösungspolymerisation durchgeführt wird. Das Zerkleinern kann durch dem Fachmann bekannte Zerkleinerungsvorrichtungen, wie etwa einem Fleischwolf, erfolgen. Auch diese Verfahrenschritte können, ebenso wie die Verfahrensschritte ii) und iii), kontinuierlich erfolgen.

Im Verfahrensschritt v) des erfindungsgemäßen Verfahrens wird das gegebenenfalls zuvor zerkleinerte Polymergel getrocknet. Die Trocknung des Polymergels erfolgt vorzugsweise in geeigneten Trocknern oder Öfen. Beispielhaft seien Drehrohröfen, Wirbelbetttrockner, Tellertrockner, Paddeltrockner oder Infrarottrockner genannt. Weiterhin ist es erfindungsgemäß bevorzugt, dass die Trocknung des Polymergels im Verfahrensschritt v) bis zu einem Wassergehalt von 0,5 bis 25 Gew.-%, vorzugsweise von 1 bis 10 Gew.-% erfolgt, wobei die Trocknungstemperaturen üblicherweise in einem Bereich von 100 bis 200°C liegen. Durch die Verwendung von Bandtrocknen kann auch dieser Verfahrensschritt v) kontinuierlich durchgeführt werden.

Im Verfahrensschritt vi) des erfindungsgemäßen Verfahrens können die im Verfahrensschritt v) erhaltenen, wasserabsorbierenden Polymergebilde insbesondere dann, wenn sie durch Lösungspolymerisation erhalten wurden, noch zermahlen und auf die eingangs genannte Wunschkomgröße abgesiebt werden. Das Zermahlen der getrockneten, wasserabsorbierenden Polymergebilde erfolgt vorzugsweise in geeigneten, mechanischen Zerkleinerungsvorrichtungen, wie etwa einer Kugelmühle, während das Absieben beispielsweise durch Verwendung von Sieben mit geeigneter Maschenweite erfolgen kann.

Im Verfahrensschritt vii) des erfindungsgemäßen Verfahrens werden die gegebenenfalls zermahlenen und abgesiebten wasserabsorbierenden Polymergebilde oberflächennachvernetzt. Zur Oberflächennachvernetzung werden die getrockneten und gegebenenfalls zermahlenen und abgesiebten wasserabsorbierenden Polymergebilde aus dem Verfahrensschritt v) oder vi) aber das noch nicht getrocknete, jedoch vorzugsweise bereits zerkleinerte Polymergel aus dem Verfahrensschritt iii) oder iv) mit einem vorzugsweise organischen, chemischen Oberflächennachvernetzer in Kontakt gebracht wird. Dabei wird der Nachvernetzer insbesondere dann, wenn er unter den Nachvernetzungsbedingungen nicht flüssig ist, vorzugsweise in Form eines Fluids umfassend den Nachvernetzer sowie ein Lösungsmittel mit den wasserabsorbierenden Polymergebilde bzw. dem Polymergel in Kontakt gebracht. Als Lösungsmittel werden dabei vorzugsweise Wasser, mit Wasser mischbare organische Lösungsmittel wie etwa Methanol, Ethanol, 1-Propanol, 2-Propanol oder 1-Butanol oder Mischungen aus mindestens zwei dieser Lösungsmittel eingesetzt, wobei Wasser als Lösungsmittel am meisten bevorzugt ist. Weiterhin ist es bevorzugt, dass der Nachvernetzer in dem Fluid in einer Menge in einem Bereich von 5 bis 75 Gew.-%, besonders bevorzugt 10 bis 50 Gew.-% und am meisten bevorzugt 15 bis 40 Gew.-%, bezogen auf das Gesamtgewicht des Fluids, enthalten ist.

Das in Kontakt bringen des wasserabsorbierenden Polymergebildes bzw. des gegebenenfalls zerkleinerten Polymergels mit dem Fluid beinhaltend den Nachvernetzer erfolgt im erfindungsgemäßen Verfahren vorzugsweise durch gutes Vermischen des Fluids mit dem Polymergebilde bzw. dem Polymergel.

Geeignete Mischaggregate zum Aufbringen des Fluids sind z. B. der Patterson-Kelley-Mischer, DRAIS-Turbulenzmischer, Lödigemischer, Ruberg-Mischer, Schneckenmischer, Tellermischer und Wirbelschichtmischer sowie kontinuierlich arbeitende senkrechte Mischer, in denen das Polymergebilde mittels rotierender Messer in schneller Frequenz gemischt wird (Schugi-Mischer). Auch kann das Vermischen der wasserabsorbierenden Polymergebilde mit dem Fluid beinhaltend den Nachvernetzer in einem sich drehenden Behälter erfolgen. Ein solches Verfahren ist beispielsweise in der DE-A-10 2007 024 080 beschrieben.

Das Polymergebilde bzw. das Polymergel wird in dem erfindungsgemäßen Verfahren bei der Nachvernetzung vorzugsweise mit höchstens 20 Gew. -%, besonders bevorzugt mit höchstens 15 Gew.-%, darüber hinaus bevorzugt mit höchstens 10 Gew. -%, darüber hinaus noch mehr bevorzugt mit höchstens 5 Gew.-% an Lösungsmittel, vorzugsweise Wasser, in Kontakt gebracht.

Bei Polymergebilden in der Form von vorzugsweise kugelförmigen Teilchen ist es erfindungsgemäß weiterhin bevorzugt, dass das in Kontakt bringen derart erfolgt, dass lediglich der Außenbereich, nicht jedoch der innere Bereich der teilchenförmigen Polymergebilde mit dem Fluid und somit dem Nachvernetzer in Kontakt gebracht werden.

Als Nachvernetzer, die im erfindungsgemäßen Verfahren eingesetzt werden, werden vorzugsweise Verbindungen verstanden, die mindestens zwei funktionelle Gruppen aufweisen, die mit funktionellen Gruppen eines Polymergebildes in einer Kondensationsreaktion (=Kondensationsvernetzer), in einer Additionsreaktion oder in einer Ringöffnungsreaktion reagieren können. Als Nachvernetzer sind im erfindungsgemäßen Verfahren diejenigen bevorzugt, die in WO 2004/037903 A2 als Vernetzer der Vernetzerklassen II genannt wurden.

Unter diesen Verbindungen sind als Nachvernetzer besonders bevorzugt Kondensationsvernetzer wie beispielsweise Diethylenglykol, Triethylenglykol, Polyethylenglykol, Glyzerin, Polyglyzerin, Propylenglykol, Diethanolamin, Triethanolamin, Polyoxypropylen, Oxyethylen-Oxypropylen-Blockcopolymere, Sorbitanfettsäureester, Polyoxyethylensorbitanfettsäureester, Trimethylolpropan, Pentaerytrit, Polyvinylalkohol, Sorbitol, 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1, 3-dioxolan-2-on, 1,3-Dioxan-2-on, 4-Methyl-1,3-dioxan-2-on, 4,6-Dimethyl-1,3-dioxan-2-on sowie 1,3-Dioxolan-2-on.

Nachdem die Polymergebilde bzw. die Polymergele mit dem Nachvernetzer bzw. mit dem Fluid beinhaltend den Nachvernetzer in Kontakt gebracht wurden, werden sie auf eine Temperatur im Bereich von 50 bis 300°C, vorzugsweise 75 bis 275°C und besonders bevorzugt 150 bis 250°C erhitzt, so dass, vorzugsweise wodurch, der Außenbereich der Polymergebilde im Vergleich zum Innenbereich stärker vernetzt (=Nachvemetzung) und, sofern Polymergel eingesetzt werden, diese zugleich auch getrocknet werden. Die Zeitdauer der Wärmebehandlung wird durch die Gefahr, dass das gewünschte Eigenschaftsprofil der Polymergebilde infolge von Hitzeeinwirkung zerstört wird, begrenzt.

Weiterhin kann es vorteilhaft sein, wenn vor, während oder nach der Durchführung des Verfahrensschrittes vii) noch weitere Oberflächenmodifizierungen, wie etwa die Beschichtung der gegebenenfalls bereits oberflächennachvernetzten, wasserabsorbierenden Polymergebilde mit sogenannten "*anti-cacking*"-Mitteln, mit Fließhilfsmitteln wie etwa Polyethylenglykolen, mit geruchsbindenen Mitteln, wie etwa Cyclodextrinen, Tanninen, Tee-Extrakten oder Zeolithen, oder aber mit Permeabilitätssteigernden Mitteln, wie etwa anorganischen Pulvern oder Aluminiumsalzen, durchgeführt werden. Derartige Modifizierungsmaßnahmen sind aus dem Stand der Technik hinlänglich bekannt

Offenbart wird hier auch ein wasserabsorbierendes, auf säuregruppenhaltigen Monomeren basierendes Polymergebilde, welches durch das erfindungsgemäße Verfahren, bei dem vorzugsweise wasserabsorbierende, auf säuregruppenhaltigen Monomeren basierende, feinteilige Polymergebilde als Feinteilchen eingesetzt werden, erhältlich ist, wobei dieses wasserabsorbierende Polymergebilde vorzugsweise folgende Eigenschaften aufweist:
(β1) eine gemäß der hierin beschriebenen Testmethode bestimmte Absorptionsgeschwindigkeit von mehr als 0,2 g/g/s, besonders bevorzugt von mehr als 0,22 g/g/s, noch mehr bevorzugt von mehr als 0,24 g/g/s und am meisten bevorzugt in einem Bereich von 0,25 bis 0,30 g/g/s;
(β2) eine nach ERT 460.2-02 bestimmte Schüttdichte von mehr als 530 g/L, besonders bevorzugt von mehr als 560 g/L und am meisten bevorzugt von mehr als 590 g/L.

Offenbart werden hier auch wasserabsorbierende, auf säuregruppenhaltigen Monomeren basierende Polymergebilde, welche folgende Eigenschaften aufweisen:
(β1) eine gemäß der hierin beschriebenen Testmethode bestimmte Absorptionsgeschwindigkeit von mehr als 0,20 g/g/s, besonders bevorzugt von mehr als 0,22 g/g/s, noch mehr bevorzugt von mehr als 0,24 g/g/s und am meisten bevorzugt in einem Bereich von 0,25 bis 0,30 g/g/s;
(β2) eine nach ERT 460.2-02 bestimmte Schüttdichte von mehr als 530 g/L, besonders bevorzugt von mehr als 560 g/L und am meisten bevorzugt von mehr als 590 g/L.

Im Inneren der Polymergebilde sind Feinteilchen, besonders bevorzugt wasserabsorbierende, auf säuregruppenhaltigen Monomeren basierende, feinteilige Polymergebilde, welche zu mindestens 90 Gew.-%, besonders bevorzugt zu mindestens 95 Gew.-% und am meisten bevorzugt zu mindestens 99 Gew.-%, jeweils bezogen auf das Gesamtgewicht der Feinteilchen bzw. der wasserabsorbierenden, auf säuregruppenhaltigen Monomeren basierenden, feinteiligen Polymergebilde, auf Partikeln mit einer Partikelgröße von weniger als 150 µm bestehen, eingeschlossen. Solche wasserabsorbierenden Polymergebilde sind durch ein Verfahren erhältlich, bei dem einer vorzugsweise wässrigen Monomerlösung vor der Durchführung der Polymerisation solche Feinteilchen bzw. wasserabsorbierenden, auf säuregruppenhaltigen Monomeren basierenden, feinteiligen Polymergebilde zugesetzt werden.

Offenbart wird auch eine Vorrichtung zur Herstellung wasserabsorbierender Polymergebilde, mindestens umfassend
- einen Mischer, in dem ein erster Strom aus Feinteilchen, vorzugsweise aus wasserabsorbierenden, auf säuregruppenhaltigen Monomeren basierende, feinteiligen Polymergebilden und mindestens ein weiterer Strom aus einer Monomerlösung aus verschiedenen Richtungen gleichzeitig auf ein rotierendes Mischwerkzeug geleitet werden kann, wobei der Mischer einen Auslass für die Mischung aus der Monomerlösung und den feinteiligen Polymergebilden aufweist;
- eine mit dem Auslass verbundene Polymerisationsvorrichtung.

Als Mischer werden vorzugsweise diejenigen Mischvorrichtungen eingesetzt, die bereits eingangs im Zusammenhang mit dem erfindungsgemäßen Verfahren als bevorzugte Mischvorrichtungen genannt wurden, während als Polymerisationsvorrichtungen insbesondere Bandpolymerisatoren oder ein Schneckenextruder eingesetzt werden können. Bandpolymerisatoren sind insbesondere in der EP-A-228 638 beschrieben. An die Polymerisationsvorrichtung können sich auch vorzugsweise kontinuierlich arbeitende Zerkleinerungsvorrichtungen und nachfolgend vorzugsweise kontinuierlich arbeitende Trocknungsvorrichtungen anschließen.

Die Formulierung "*eine mit dem Auslass verbundene Polymerisationsvorrichtung*", wie sie hierin verwendet wird, soll ausdrücken, dass die Mischung aus der Monomerlösung und den Feinteilchen bzw. den wasserabsorbierenden, auf säuregruppenhaltigen Monomeren basierenden, feinteiligen Polymergebilden, welche den Mischer verlässt, unmittelbar der Polymerisationsvorrichtung zugeführt werden kann.

Offenbart wird auch ein Verbund, beinhaltend die erwähnten wasserabsorbierenden Polymergebilde bzw. die durch das erfindungsgemäße Verfahren erhältlichen wasserabsorbierenden Polymergebilde und ein Substrat. Es ist dabei bevorzugt, dass die Polymergebilde und das Substrat miteinander fest verbunden sind. Als Substrate sind Folien aus Polymeren, wie beispielsweise aus Polyethylen, Polypropylen oder Polyamid, Metalle, Vliese, Fluff, Tissues, Gewebe, natürliche oder synthetische Fasern, oder andere Schäume bevorzugt. Weiterhin ist es bevorzugt, dass der Verbund mindestens einen Bereich umfasst, welcher das wasserabsorbierende Polymergebilde in einer Menge im Bereich von etwa 15 bis 100 Gew.-%, vorzugsweise etwa 30 bis 100 Gew.-%, besonders bevorzugt von etwa 50 bis 99,99 Gew.-%, ferner bevorzugt von etwa 60 bis 99,99 Gew.-% und darüber hinaus bevorzugt von etwa 65 bis 99 Gew.-%, jeweils bezogen auf das Gesamtgewicht des betreffenden Bereichs des Verbundes, beinhaltet, wobei dieser Bereich vorzugsweise eine Größe von mindestens 0,01 cm³, vorzugsweise mindestens 0,1 cm³ und am meisten bevorzugt mindestens 0,5 cm³ aufweist.

In einer besonders bevorzugten Ausführungsform des Verbundes handelt es sich um einen flächenförmigen Verbund, wie er in der WO-A-02/056812 als "*absorbent material*" beschrieben ist.

Offenbart wird auch ein Verfahren zur Herstellung eines Verbundes, wobei die genannten wasserabsorbierenden Polymergebilde bzw. die durch das erfindungsgemäße Verfahren erhältlichen wasserabsorbierenden Polymergebilde und ein Substrat und gegebenenfalls ein Zusatzstoff miteinander in Kontakt gebracht werden. Als Substrate werden vorzugsweise diejenigen Substrate eingesetzt, die bereits vorstehend im Zusammenhang mit dem Verbund genannt wurden.

Offenbart wird auch ein Verbund erhältlich nach dem vorstehend beschriebenen Verfahren, wobei dieser Verbund vorzugsweise die gleichen Eigenschaften aufweist wie der vorstehend beschriebene Verbund.

Offenbart werden auch chemische Produkte beinhaltend die genannten Polymergebilde oder einen Verbund. Bevorzugte chemische Produkte sind insbesondere Schäume, Formkörper, Fasern, Folien, Filme, Kabel, Dichtungsmaterialien, flüssigkeitsaufnehmenden Hygieneartikel, insbesondere Windeln und Damenbinden, Träger für pflanzen- oder pilzwachstumsregulierende Mittel oder Pflanzenschutzwirkstoffe, Zusätze für Baustoffe, Verpackungsmaterialien oder Bodenzusätze.

Auch die Verwendung der Polymergebilde oder des Verbundes in chemischen Produkten, vorzugsweise in den vorstehend genannten chemischen Produkten, insbesondere in Hygieneartikeln wie Windeln oder Damenbinden, sowie die Verwendung der Superabsorberpartikel als Träger für pflanzen- oder pilzwachstumsregulierende Mittel oder Pflanzenschutzwirkstoffe sei hier erwähnt. Bei der Verwendung als Träger für pflanzen- oder pilzwachstumsregulierende Mittel oder Pflanzenschutzwirkstoffe ist es bevorzugt, dass die pflanzen- oder pilzwachstumsregulierende Mittel oder Pflanzenschutzwirkstoffe über einen durch den Träger kontrollierten Zeitraum abgegeben werden können.

Die Erfindung wird nun näher erläutert.

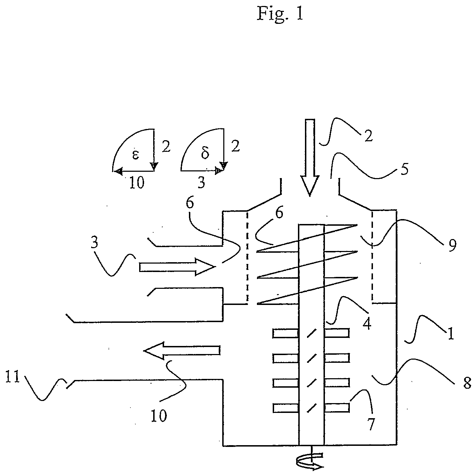

Es zeigt die Figur 1 eine Mischvorrichtung, welche im erfindungsgemäßen Verfahren zum Vermischen der Monomerlösung und den Feinteilchen verwendet werden kann.

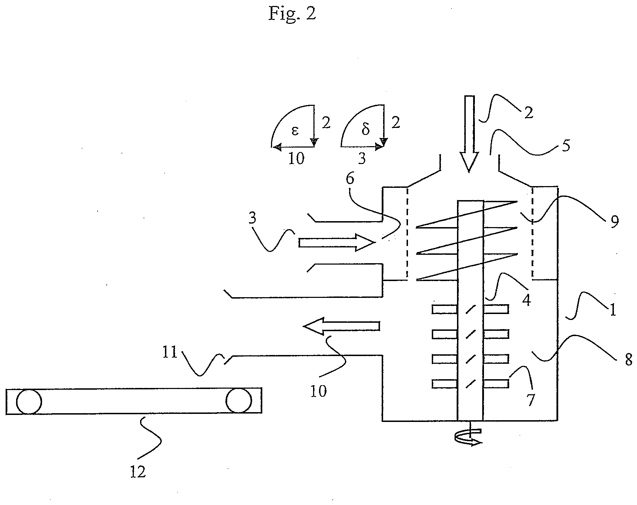

Es zeigt die Figur 2 ein Beispiel einer Vorrichtung zur Herstellung wasserabsorbierender Polymergebilde.

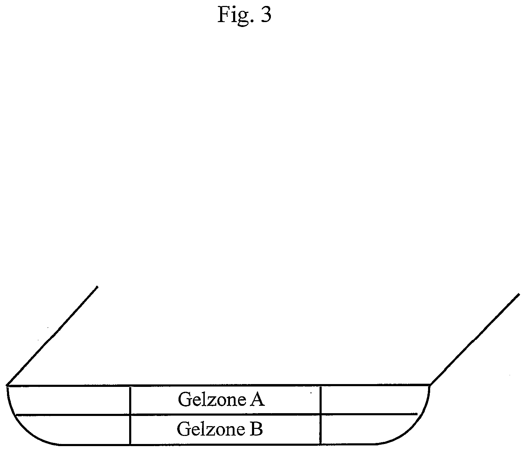

Es zeigt die Figur 3 den Querschnitt des bei der Polymerisation in Vergleichsbeispiel 2 und Beispiel 2 auf dem Polymerband erhaltenen Polymergels.

Die Figur 1 zeigt einen im erfindungsgemäßen Verfahren einsetzbare Mischvorrichtung 1. Über einen vertikalen Zuführschacht 5 wird ein erster Strom 2 aus Feinteilchen auf ein rotierendes Mischwerkzeug 4 geleitet. Über eine seitliche Zufuhr 6 wird ein weitere Strom 3 der Monomerlösung ebenfalls auf das rotierende Mischwerkzeug 4 geleitet, wobei die Ströme 2 und 3 einen Winkel δ (in der Figur 1 hat dieser einen Wert von etwa 90°) einschließen. Innerhalb eines Förderbereiches 9 ist das rotierende Werkzeug 4 beispielsweise als Förderschnecke ausgebildet, um die Feinteilchen nach unten in den Mischraum 8 zu befördern. Im Mischraum 8 kommt es zu einem intensiven Vermischen der Feinteilchen und der Monomerlösung. Dazu weist das Mischwerkzeug 4 im Mischraum 8 von oben nach unten wirksame Flügel 7 auf (also Flügel, die beim rotieren des Mischwerkzeugs 4 die Mischung aus den Feinteilchen und der Monomerlösung nach unten befördern. Unterhalb des Mischraumes 8 kann auch noch eine Dispergiervorrichtung angebracht sein (in der Figur 1 nicht gezeigt).

Über einen seitlichen Auslass 11 wird die Mischung aus den Feinteilchen und der Monomerlösung aus dem Mischer 1 abgeführt, wobei der Strom 10 dieser Mischung und der Strom 2 der Feinteilchen den Winkel ε (in der Figur 1 hat dieser einen Wert von etwa 90°) bilden.

In der Figur 2 ist die vorstehend beschriebene Mischvorrichtung derart mit einem Bandpolymerisator 12 verbunden, dass die über den seitlichen Auslass 11 austretende Mischung aus den Feinteilchen und der Monomerlösung unmittelbar auf ein Polymerisationsband aufgebracht werden kann.

### TESTMETHODEN

### "Free Swell Rate -FSR"

Die Bestimmung der Absorptionsgeschwindigkeit erfolgte über die Messung der sogenannten "*Free Swell Rate* - *FSR*" gemäß dem in der EP-A-0 443 627 auf der Seite 12 beschriebenen Testverfahren.

### "Centrifusation Retention Capacity - CRC"

Die Bestimmung des CRC-Wertes erfolgte gemäß der EDANA-Testmethode WSP 241.2-05 (EDANA = *European Disposables and Nonwovens Association*)

### BEISPIELE

### Vergleichsbeispiel 1: Einarbeiten von SAP-Fines in einer Monomerlösung mittels eines herkömmlichen Mischtopfes

12.000 kg einer Monomerlösung beinhaltend 32 Gew.-% Acrylsäure, die zu 75 Mol-% neutralisiert war, 0,3% Polyethylenglykol-300-diacrylat, 0,3% Allyloxypolyethylenglykolacrylsäureester, 3% SAP-Fines (Partikel mit einer Partikel-Größe von weniger als 200 µm, die mittels Methylenblau zu besseren Kenntlichmachung eingefärbt wurden), und, bezogen auf die Monomermenge, 400 ppm Natriumperoxydisulfat, 50 ppm H₂O₂ und 10 ppm Ascorbinsäure wurden vorgelegt.

Bei dem Mischtopf handelt es sich um ein zylindrisches Kunststoffgefäß mit einem Innendurchmesser von 22 cm. Bis zum Monomerenauslass des Topfes, der sich ein einer Höhe vom 23,5cm befand, ergibt sich somit ein Volumen von 8,93 Litern. Die Durchmischung erfolgte mit einem handelsüblichem Laborrührwerk mit ca. 800 UpM und einem Ankerrührer. Die Zufuhr von H₂O₂ und Natriumperoxodisulfat erfolgte in den Mischtopf, die Ascorbinsäure wurde erst im Auslauf zugesetzt.

### Beispiel 1: Einarbeiten von SAP-Fines in einer Monomerlösung mittels eines IKA- Mischers

6.000 kg einer Monomerlösung beinhaltend 32 Gew.-% Acrylsäure, die zu 75 Mol-% neutralisiert war, 0,3% Polyethylenglykol-300-diacrylat, 0,3% Allyloxypolyethylenglykolacrylsäureester, 400 ppm Natriumperoxydisulfat, 50 ppm H₂O₂ und 10 ppm Ascorbinsäure wurden im IKA-Mischer mit 3% SAP-Fines (Partikel mit einer Partikel-Größe von weniger als 200 µm, die wiederum mittels Methylenblau zu besseren Kenntlichmachung eingefärbt wurden), bezogen auf die Monomermenge, vermischt.

Bei dem IKA-Mischer handelte es sich um das Modell MHD 2000/05 der Firma IKA, welcher durch eine Motordrehzahl von 3.000 /min, eine Abtriebsdrehzahl von 5.800 /min und eine Umfangsgeschwindigkeit von 22,8 m/sec gekennzeichnet war. Betrieben wurde dieser Mischer mit der von der Firma IKA erhältlichen Zuführschnecke 1SA DN 50, dem Injektormantel F und dem Generator PP, der sich aus dem von IKA erhältlichen Rotor PP und Stator 2G zusammensetzt und einen Durchmesser von etwa 80 mm aufwies.

Von den im Vergleichsbeispiel 1 und im Beispiel 1 erhaltenen Mischungen wurde das Absetzverhalten der Feinteilchen in der Monomerlösung beobachtet. Dabei wurde festgestellt, dass sich die mittels des erfindungsgemäßen Verfahrens im Beispiel 1 eingebrachten Feinteilchen deutlich langsamer absetzten als die im Vergleichsbeispiel 1. Daher könnte zur Polymerisation der Monomerlösung im Beispiel 1 eine geringere Initiatormenge eingesetzt werden, da sich die Feinteilchen langsamer absetzen.

### Vergleichsbeispiel 2:

Die im Vergleichsbeispiel 1 erhaltene Mischung aus Monomerlösung und SAP-Fines wurde auf einem Polymerband polymerisiert. Die Starttemperatur bei der Polymerisation betrug 10°C.

Im Anschluss an die Polymerisation wurden die Gelstränge im Querschnitt visuell beobachtet, um die Homogenität der Verteilung der mit methylenblau gefärbten SAP-Fines zu analysieren. Im Anschluss daran wurden Gel-Proben aus zwei unterschiedlichen Bereichen des Querschnittes gezogen (Gelzone A: oben mitte; Gelzone B: unten mitte, siehe die Figur 3). Diese Gelproben wurden mit einer 5 mm Lochscheibe gewölf und anschließend für 1,5 Stunden bei 150°C getrocknet. Schließlich wurden die Proben gemahlen und auf eine Partikelgröße in einem Bereich von 150 bis 850 µm abgesiebt. Von den so erhaltenen Polymerpartikeln wurde der CRC-und der FSR-Wert ermittelt.

### Beispiel 2:

Es wurde wie im Vergleichsbeispiel 2 verfahren, wobei jedoch die im Beispiel 1 mittels des IKA-Mischers erhaltene Mischung aus Monomerlösung und SAP-Fines auf dem Polymerisationsband polymerisiert wurde.

Wie die Ergebnisse in der nachfolgenden Tabelle zeigen, lässt beim Vergleich der Kenndaten CRC und FSR die Zudosierung mittels Mischtopf starke Unterschiede in den jeweiligen Proben erkennen, der CRC fällt von 32,3 g/g (obere Probe) auf 29,7 g/g (untere Probe) ab, gleichzeitig ist ein FSR Wert-Anstieg von 0,21 auf 0,45 g/g/sec zu erkennen bedingt durch die stärkere Vernetzung des unteren Gelbereiches mit dem höheren Anteil an SAP-Fines.

Dieser Effekt macht sich bei einer 5%igen Feinst Zudosierung noch stärker bemerkbar, hier ist ein CRC Abfall von 31,9 g/g auf 27,5 g/g und ein FSR Anstieg von 0,13 auf 0,46 g/g/sec feststellbar. Durch Zudosierung mittels des IKA-Mischers kann im Gegensatz dazu bei allen Proben ein CRC von ca. 32 g/g sowie ein FSR von ca. 0,20 erzielt werden. Damit ist gezeigt, dass durch das erfindungsgemäß Verfahren mit rezyklierten SAP-Fines hergestellte Superabsorber mit deutlich homogeneren Absorptionseigenschaften erhalten werden können.

| | CRC-Wert [g/g] Mischtopf | CRC-Wert [g/g] IKA-Mischer | FSR-Wert [g/g/sec] Mischtopf | FSR-Wert [g/g/sec] IKA-Mischer |
|---|---|---|---|---|
| Gelzone A | 32,3 | 32,5 | 0,21 | 0,23 |
| Gelzone B | 29,7 | 32,1 | 0,45 | 0,21 |

### BEZUGSZEICHENLISTE

- 1: Mischvorrichtung
- 2: Richtung, in der die feinteiligen Polymergebilde der Mischvorrichtung zugeführt werden
- 3: Richtung, in der die Monomerlösung der Mischvorrichtung zugeführt wird
- 4: rotierendes Mischwerkzeug
- 5: Zuführschacht für feinteilige Polymergebilde
- 6: seitliche Zufuhr für die Monomerlösung
- 7: Flügel
- 8: Mischraum
- 9: Förderbereich
- 10: Richtung, in der die Mischung den Mischer verlässt
- 11: Auslass für die Mischung
- 12: Polymerisationsvorrichtung

## Patentansprüche

1. Ein Verfahren zur Herstellung eines wasserabsorbierenden, auf säuregruppenhaltigen Monomeren basierenden Polymergebildes, beinhaltend die Verfahrensschritte:
i) Bereitstellen einer Monomerlösung beinhaltend das gegebenenfalls teilneutralisierte, säuregruppenhaltige Monomer;
ii) Vermischen der Monomerlösung mit Feinteilchen, welche zu mindestens 90 Gew.-%, bezogen auf das Gesamtgewicht der Feinteilchen, aus Partikeln mit einer Partikelgröße von weniger als 850 µm bestehen, unter Erhalt einer mit Feinteilchen vermischten Monomerlösung;
wobei das Vermischen im Verfahrensschritt ii) in einem Mischer (1) erfolgt, in dem ein erster Strom (2) aus den Feinteilchen und mindestens ein weiterer Strom (3) aus der Monomerlösung aus verschiedenen Richtungen gleichzeitig auf ein rotierendes Mischwerkzeug (4) geleitet werden und wobei der erste Strom (2) aus den Feinteilchen und der mindestens eine weitere Strom (3) aus der Monomerlösung einen Winkel δ in einem Bereich von 60 bis 120° bilden.

2. Das Verfahren nach Anspruch 1, wobei der Mischer einen vertikalen Zuführschacht (5) für den ersten Strom (2) aus den Feinteilchen, wenigstens ein um eine vertikale Achse rotierendes Mischwerkzeug (4) sowie eine seitliche Zufuhr (6) für den mindestens einen weiteren Strom (3) aus der Monomerlösung aufweist.

3. Das Verfahren nach Anspruch 2, wobei das Mischwerkzeug (4) als in Richtung des ersten Stroms (2) aus den Feinteilchen von oben nach unten wirksame Flügel (7) ausgebildet ist oder derartige Flügel aufweist und dass die Zufuhr der Monomerlösung zu einem Mischraum (8) schräg oder radial von der Seite her in einem Förderbereich (9) des Mischwerkzeugs (4) angeordnet und der Bereich oberhalb des Mischwerkzeugs (4) von einer Zufuhr von Monomerlösung frei ist.

4. Das Verfahren nach einem der vorhergehenden Ansprüche, wobei das Mischwerkzeug (4) mit einer Frequenz in einem Bereich von 25 bis 75 Hz rotiert.

5. Das Verfahren nach einem der vorhergehenden Ansprüche, wobei der erste Strom (2) aus den Feinteilchen und der mindestens eine weitere Strom (3) aus der Monomerlösung einen Winkel δ in einem Bereich von 60 bis 120° bilden.

6. Das Verfahren nach einem der vorhergehenden Ansprüche, wobei der Strom (10) aus der Mischung aus der Monomerlösung und den Feinteilchen, welcher den Mischer (1) verlässt, und der erste Strom (2) aus den Feinteilchen einen Winkel ε in einem Bereich von 60 bis 120° bilden.

7. Das Verfahren nach einem der vorhergehenden Ansprüche, wobei der erste Strom (2) aus den Feinteilchen und der mindestens eine weitere Strom (3) aus der Monomerlösung über einen Zeitraum von mindestens 10 Minuten gleichzeitig auf das rotierende Mischwerkzeug (4) geleitet werden.

8. Das Verfahren nach einem der vorhergehenden Ansprüche, wobei die Monomerlösung neben dem säuregruppenhaltigen Monomer mindestens einen Vernetzer beinhaltet.

9. Das Verfahren nach einem der vorhergehenden Ansprüche, wobei die Feinteilchen in einer Menge in einem Bereich von 0,1 bis 10 Gew.-%, bezogen auf das Gewicht der Monomerlösung, mit der Monomerlösung vermischt werden.

10. Das Verfahren nach einem der vorhergehenden Ansprüche, wobei die Feinteilchen wasserabsorbierende, auf säuregruppenhaltigen Monomeren basierende Polymergebilde sind.

11. Das Verfahren nach einem der vorhergehenden Ansprüche, weiterhin beinhaltend die Verfahrensschritte:
iii) radikalische Polymerisation des in der Monomerlösung enthaltenen, gegebenenfalls teilneutralisierten, säuregruppenhaltigen Monomers in Gegenwart eines Vernetzers unter Erhalt eines Polymergels,
iv) gegebenenfalls Zerkleinern des Polymergels,
v) Trocknen des gegebenenfalls zerkleinerten Polymergels unter Erhalt wasserabsorbierender Polymergebilde,
vi) gegebenenfalls Mahlen und Absieben der wasserabsorbierenden Polymergebilde,
vii) gegebenenfalls Oberflächennachvernetzung der gegebenenfalls gemahlenen und abgesiebten wasserabsorbierenden Polymergebilde.

## Claims

1. A process for producing a water-absorbing polymer structure based on acid group-containing monomers, comprising the process steps of:
i) providing a monomer solution comprising the optionally partly neutralized, acid group-containing monomer;
ii) mixing the monomer solution with fines which consist at least to an extent of 90% by weight, based on the total weight of the fines, of particles having a particle size of less than 850 µm, to obtain a monomer solution mixed with fines;
wherein the mixing in process step ii) is effected in a mixer (1) in which a first stream (2) of the fines and at least one further stream (3) of the monomer solution are passed from different directions simultaneously to a rotating mixing tool (4) and wherein the first stream (2) of the fines and the at least one further stream (3) of the monomer solution form an angle δ within a range from 60 to 120°.

2. The process according to Claim 1, wherein the mixer has a vertical supply shaft (5) for the first stream (2) of the fines, at least one mixing tool (4) which rotates about a vertical axis and a lateral feed (6) for the at least one further stream (3) of the monomer solution.

3. The process according to Claim 2, wherein the mixing tool (4) is configured in the form of paddles (7) which act from the top downwards in the direction of the first stream (2) of the fines, or has such paddles, and the supply of the monomer solution to a mixing chamber (8) is arranged obliquely or radially from the side in a conveying region (9) of the mixing tool (4), and the region above the mixing tool (4) is free from a supply of monomer solution.

4. The process according to any of the preceding claims, wherein the mixing tool (4) rotates with a frequency within a range from 25 to 75 Hz.

5. The process according to any of the preceding claims, wherein the first stream (2) of the fines and the at least one further stream (3) of the monomer solution form an angle δ within a range from 60 to 120°.

6. The process according to any of the preceding claims, wherein the stream (10) of the mixture of the monomer solution and the fines which leaves the mixer (1), and the first stream (2) of the fines, form an angle ε within a range from 60 to 120°.

7. The process according to any of the preceding claims, wherein the first stream (2) of the fines and the at least one further stream (3) of the monomer solution are passed simultaneously to the rotating mixing tool (4) over a period of at least 10 minutes.

8. The process according to any of the preceding claims, wherein the monomer solution comprises at least one crosslinker as well as the acid group-containing monomer.

9. The process according to any of the preceding claims, wherein the fines are mixed with the monomer solution in an amount within a range from 0.1 to 10% by weight, based on the weight of the monomer solution.

10. The process according to any of the preceding claims, wherein the fines are water-absorbing polymer structures based on acid group-containing monomers.

11. The process according to any of the preceding claims, further comprising the process steps of:
iii) free-radically polymerizing the optionally partly neutralized, acid group-containing monomer present in the monomer solution in the presence of a crosslinker to obtain a polymer gel,
iv) optionally comminuting the polymer gel,
v) drying the optionally comminuted polymer gel to obtain water-absorbing polymer structures,
vi) optionally grinding and screening off the water-absorbing polymer structures,
vii) optionally surface postcrosslinking the optionally ground and screened-off water-absorbing polymer structures.

## Revendications

1. Procédé de fabrication d'une structure polymère absorbant l'eau, à base de monomères contenant des groupes acides, comprenant les étapes de procédé suivantes :
i) la préparation d'une solution de monomères contenant le monomère contenant des groupes acides éventuellement partiellement neutralisé ;
ii) le mélange de la solution de monomères avec des particules fines, qui sont constituées par au moins 90 % en poids, par rapport au poids total des particules fines, de particules ayant une taille de particule de moins de 850 µm, pour obtenir une solution de monomères mélangée avec des particules fines ;
le mélange à l'étape de procédé ii) ayant lieu dans un mélangeur (1), dans lequel un premier courant (2) des particules fines et au moins un autre courant (3) de la solution de monomères sont conduits à partir de différentes directions simultanément sur un outil de mélange rotatif (4), et le premier courant (2) des particules fines et ledit au moins un autre courant (3) de la solution de monomères formant un angle δ dans une plage allant de 60 à 120°.

2. Procédé selon la revendication 1, dans lequel le mélangeur comprend un puits d'alimentation vertical (5) pour le premier courant (2) des particules fines, au moins un outil de mélange (4) rotatif autour d'un axe vertical, ainsi qu'une alimentation latérale (6) pour ledit au moins un autre courant (3) de la solution de monomères.

3. Procédé selon la revendication 2, dans lequel l'outil de mélange (4) est configuré sous la forme d'ailettes (7) actives du haut vers le bas dans la direction du premier courant (2) des particules fines ou comprend de telles ailettes, et en ce que l'alimentation de la solution de monomères dans une chambre de mélange (8) est agencée en biais ou radialement depuis le côté dans une zone de transport (9) de l'outil de mélange (4) et la zone au-dessus de l'outil de mélange (4) est exempte d'une alimentation de solution de monomères.

4. Procédé selon l'une quelconque des revendications précédentes, dans lequel l'outil de mélange (4) est mis en rotation à une fréquence dans une plage allant de 25 à 75 Hz.

5. Procédé selon l'une quelconque des revendications précédentes, dans lequel le premier courant (2) des particules fines et ledit au moins un autre courant (3) de la solution de monomères forment un angle δ dans une plage allant de 60 à 120°.

6. Procédé selon l'une quelconque des revendications précédentes, dans lequel le courant (10) du mélange de la solution de monomères et des particules fines, qui quitte le mélangeur (1), et le premier courant (2) des particules fines forment un angle ε dans une plage allant de 60 à 120°.

7. Procédé selon l'une quelconque des revendications précédentes, dans lequel le premier courant (2) des particules fines et ledit au moins un autre courant (3) de la solution de monomères sont conduits simultanément sur l'outil de mélange rotatif (4) pendant une durée d'au moins 10 minutes.

8. Procédé selon l'une quelconque des revendications précédentes, dans lequel la solution de monomères contient en plus du monomère contenant des groupes acides au moins un agent de réticulation.

9. Procédé selon l'une quelconque des revendications précédentes, dans lequel les particules fines sont mélangées avec la solution de monomères en une quantité dans une plage allant de 0,1 à 10 % en poids, par rapport au poids de la solution de monomères.

10. Procédé selon l'une quelconque des revendications précédentes, dans lequel les particules fines sont des structures polymères absorbant l'eau à base de monomères contenant des groupes acides.

11. Procédé selon l'une quelconque des revendications précédentes, contenant en outre les étapes de procédé suivantes :
iii) la polymérisation radicalaire du monomère contenant des groupes acides éventuellement partiellement neutralisé contenu dans la solution de monomères en présence d'un agent de réticulation pour obtenir un gel polymère,
iv) éventuellement la fragmentation du gel polymère,
v) le séchage du gel polymère éventuellement fragmenté pour obtenir des structures polymères absorbant l'eau,
vi) éventuellement le broyage et le tamisage des structures polymères absorbant l'eau,
vii) éventuellement la post-réticulation de surface des structures polymères absorbant l'eau éventuellement broyées et tamisées.
